# EUROPEAN PATENT APPLICATION

(11) **EP 3 929 001 A1**
(43) Date of publication of application: **29.12.2021**
(21) Application number: 20758733.8
(22) Date of filing: 19.02.2020
(51) Int. Cl.: B42D 25/324, B42D 25/328, G02B 27/42

(54) **MICRO-OPTICAL SYSTEM FOR FORMING VISUAL IMAGES**

(30) Priority: 20.02.2019 EA 201900247
(71) Applicant: Computer Holography Centre Ltd, Zelenograd, Moscow 124460 (RU)
(72) Inventor: GONCHARSKIY, Alexander Vladimirovish, Moscow, 117321 (RU); GONCHARSKIY, Anton Aleksandrovich, Moscow, 117321 (RU); DURLEVICH, Svyatoslav Radomirovich, Moscow, 119571 (RU); MELNIK, Dmitry Vladimirovich, Moscow, 109125 (RU)
(74) Representative: Zaboliene, Reda
(86) International application number: PCT/RU2020/000080
(87) International publication number: WO 2020/171740

(57) **Abstract**

The micro-optical visual imaging system claimed in the invention is essentially a device used for authentication of products and can be effectively used to protect banknotes and securities.

Micro-optical system, according to the claims of the invention, is a reflective planar single-layer phase element, which consists of fragments of multigrade planar axial Fresnel lenses with parabolic phase function and diffraction gratings. The design of the optical element makes it possible to form images consisting of letters, digits, or symbols with kinematic motion effects. When the micro-optical system is illuminated by a point light source at a diffraction angle of less than 60°, the micro-optical system forms the effects of alternation of two images and the effects of the motion of image fragments when the optical element is tilted left/right and up/down. The observer sees a different color image over the entire area of the micro-optical system at diffraction angles greater than 60°.

The claimed set of essential features of the invention ensured the achievement of the technical result consisting in the expansion of the possibilities of visual control, as well as in better of protection of the micro-optical system against counterfeiting. The micro-optical system for the formation of visual images can be implemented using the available standard equipment.

## Description

Currently, various security technologies are used to protect banknotes, securities, documents, and plastic cards against counterfeiting. These may be watermarks, diving threads, holograms, embedded liquid-crystal optical elements changing polarization of incident light, latent images, etc. (van Renesse, Rudolf L, Optical Document Security, 3rd ed. British Library Cataloguing in Publication Data, 2005, ISBN 1-58053-258-6, van Renesse, Rudolf L, Optical Document Security, 2nd ed. British Library Cataloguing in Publication Data, 1998, ISBN 0-89006-982-4).

The micro-optical visual imaging system with kinematic motion effects claimed as an invention is primarily a device used for authentication of products, and can be efficiently used to protect banknotes, securities, documents, plastic cards, and excise stamps.

The patent for invention (EA017394(B1)) is close to the claimed invention in terms of the combination of its features. In this patent kinematic motion effects of image fragments are formed by off-axis flat Fresnel lenses. When the micro-optical system described in the patent for the invention (EA017394(B1)) is illuminated by a point source, an observer sees an image composed of points. Each image point is formed by an off-axis Fresnel lens. The image may consist of numbers, letters, and symbols. Off-axis Fresnel lenses with a parabolic or saddle-shaped phase function are proposed to be used in the prototype. The use of Fresnel lenses with a parabolic and saddle-shaped phase function makes it possible to obtain different kinematic effects of the motion of image fragments when the optical element is tilted. In the utility model (RU127208), a variant of the micro-optical system based on patent (EA017394(B1)) is proposed, where at low diffraction angles the observer sees kinematic effects of motion of the fragments of an image consisting of bright dots, whereas at high diffraction angles a different colored image is seen in the entire area of the optical element. In the preferred embodiment, binary Fresnel lenses are used to form the image. In another embodiment of the invention, the flat Fresnel lenses are multigrade, resulting in enhanced protection of the optical element against counterfeiting.

The closest invention patent to the claimed invention (prototype) in terms of the combination of features is EA030058(B1). The micro-optical system according to the claim of the proposed invention consists of fragments of multigrade flat axial Fresnel lenses with a parabolic phase function and of diffraction gratings. A special choice of the parameters of the Fresnel multigrade lenses and diffraction gratings makes it possible to form images with kinematic effects. When illuminated by a point light source at a diffraction angle of less than 60°, the micro-optical system forms an image consisting of black and white stripes, which does not change when the optical element is rotated from left to right. The kinematic effect consists in the motion of the black and white fringes when the micro-optical system is tilted up and down. At diffraction angles greater than 60° the observer sees a different colored image over the entire area of the micro-optical system. The kinematic effect is visually easy to control and depends only slightly on illumination. The visual image consists of black and white stripes, which, to a certain extent, limits the flexibility of the implementation of the invention. In contrast to the prototype, the image in the claimed invention consists of different letters, digits or symbols, thereby expanding the possibilities of using the invention both for protecting banknotes and for protecting documents, plastic cards, excise stamps, and brands. Like in the prototype, the claimed invention uses fragments of multigrade Fresnel lenses and diffraction gratings with small periods, which are supposed to be originated using electron-beam technology.

The purpose of the present invention is to enhance the visual inspection capabilities compared to the prototype, enhance the protection of the micro-optical system against counterfeiting, and allow it to be implemented using available standard equipment.

The formulated task is solved in the claimed micro-optical system for forming visual images according to claim 1. The micro-optical system is a flat single-layer reflective phase diffractive optical element forming an image of letters, digits, or symbols with kinematic effects of motion. Area Q of the optical element, which is a rectangle |x| ≤ Lₓ/2 |y| ≤ L_{y}/2, is partitioned with period Tϕ into elementary areas Qij with the size no greater than 250 µm centered at points (xi,yj), i = 1 ... N, j = 1 ... M. In each area Qij the microrelief of the flat optical element with the phase function Φ(x,y) is computed. At the point (x,y) of each elementary area Qij the phase function is computed by the formula Φ(x,y) = ϕᵢⱼ(x,y) · ψ(x,y), i = 1 ... N, j = 1 ... M. The function ϕᵢⱼ(x,y) is the phase function of the axial Fresnel lens centered at the point (xi,yj) and computed by the formula ϕᵢⱼ(x,y) = C [(x-xᵢ)²+(y-yⱼ)²], where C is a given parameter. The function ψ(x,y) is the periodic extension of the function ψ- (x,y) with the period Tψ that defines a binary representation of a letter, digit, or symbol, and the period Tϕ of the Fresnel lens does not coincide with the period Tψ, but differs from it by no more than 5%. In each elementary area Qij subareas with phase function Φ(x,y) equal to a constant are distinguished, which are partially or fully filled with diffraction gratings of different orientation with periods of 0.35-1.0 µm. When the micro-optical system is illuminated by a point light source at the diffraction angle of less than 60° the observer sees an image on the entire area Q of the optical element consisting of light letters on a dark background. The kinematic effect consists in the motion of the letters when the optical element is tilted. At diffraction angles greater than 60° the observer sees another colored image over the entire area of the micro-optical element.

The micro-optical system for the formation of visual images according to claim 2 is a flat single-layer reflective diffractive optical phase element that forms an image of letters, digits, or symbols with kinematic motion effects. The area Q of the optical element, which is a rectangle |x| ≤ Lₓ/2 |y| ≤ L_{y}/2, is subdivided with the period of Tϕ into elementary areas Qij with the sizes no greater than 250 µm and centered at points (xi,yj), i = 1 ... N, j = 1 ... M. In each area Qij the microrelief of the flat optical element with the phase function Φ(x,y) is computed, where function Φ(x,y) at the point (x,y) of each elementary area Qij is calculated by the formula Φ(x,y) = ϕᵢⱼ(x,y) · ψ(x,y). The function ϕᵢⱼ(x,y) is the phase function of the axial Fresnel lens centered at the point (xi,yj) calculated by the formula ϕᵢⱼ(x,y) = C [(x-xᵢ)²+(y-yⱼ)²], where C is a given parameter. The binary function ψ(x,y) is the logical addition of two binary functions ψ⁽¹⁾(x,y) and ψ⁽²⁾(x,y), which are periodic extensions functions ψ- ⁽¹⁾(x,y) and ψ- ⁽²⁾(x,y) with the periods of Tψ⁽¹⁾ and Tψ⁽²⁾, respectively. The functions ψ̅⁽¹⁾(x,y) and ψ̅⁽²⁾(x,y) define the first and second binary image, respectively, of the letter, digit, or symbol, and the period T_{ϕ} of the Fresnel lenses and the periods T_{ψ}⁽¹⁾ and T_{ψ}⁽²⁾ do not coincide but differ by no more than 5%. In each elementary area Qij subareas with the phase function Φ(x,y) equal to a constant are distinguished, which are partially or fully filled with diffraction gratings of different orientation with periods of 0.35-1.0 µm. When the micro-optical system is illuminated by a point light source with the diffraction angle less than 60° the observer sees over the entire area Q of the optical element two images defined by functions ψ⁽¹⁾(x,y) and ψ⁽²⁾(x,y). The kinematic effect consists in the motion of the image fragments when the optical element is tilted. At the diffraction angles greater than 60° the observer sees another colored image over the entire area of the micro-optical element.

The micro-optical system for forming visual images according to claim 3, differs from the micro-optical system according to claim 2, in that the parameters Δ_{T}⁽¹⁾= T_{ψ}⁽¹⁾- T_{ϕ} 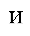 Δ_{T}⁽²⁾= T_{ψ}⁽²⁾- T_{ϕ} differ in sign. When the micro-optical system is illuminated by a point light source at diffraction angles less than 60°, the observer sees two images over the entire area Q of the optical element. The kinematic effect consists in the motion of the image fragments formed by functions ψ⁽¹⁾(x,y) and ψ⁽²⁾(x,y) toward each other when the optical element is tilted.

The micro-optical system for the formation of visual images according to claim 4 is a flat single-layer reflective diffractive optical phase element forming an image of letters, digits or symbols with kinematic motion effects. The area Q of the optical element in the form of a |x| ≤ Lₓ/2 |y|≤ L_{y}/2 is partitioned with period Tϕ into elementary areas Qij with the sizes no greater than 250 µm centered at points (xi,yj), i = 1 ... N, j = 1 ... M. Each elementary area Qij is subdivided into two rectangular subareas Q⁽¹⁾ᵢⱼ and Q⁽²⁾ᵢⱼ. In areas Q⁽¹⁾ᵢⱼ the relation y> yj is fulfilled and in areas Q⁽²⁾ᵢⱼ the relation y< yj is fulfilled. In each area Qij the microrelief of the flat optical element with the phase function Φ(x,y) is computed, which at a point (x,y) of each elementary area Qij is calculated by the formula Φ(x,y) = ϕᵢⱼ(x,y) · ψ⁽¹⁾(x,y) for points of area Q⁽¹⁾ᵢⱼ, and by the formula Φ(x,y) = ϕᵢⱼ(x,y) · ψ⁽²⁾(x,y) for points of area Q⁽²⁾ᵢⱼ, i = 1 . N, j = 1 ... M. The function ϕᵢⱼ(x,y) is the phase function of the axial Fresnel lens centered at the point (xi,yj) computed by the formula ϕᵢⱼ(x,y) = C [(x-xᵢ)²+(y-yⱼ)²], where C is a given parameter. The functions ψ⁽¹⁾(x,y) and ψ̅⁽²⁾(x,y) are periodic extensions of the functions ψ̅⁽¹⁾(x,y) and ψ̅⁽²⁾(x,y) with period Tψ. The functions ψ̅⁽¹⁾(x,y) and ψ̅⁽²⁾(x,y) define the first and second binary representation of the letter, digit, or symbol in the areas Q⁽¹⁾ᵢⱼ and Q⁽²⁾ᵢⱼ , respectively, and the period Tϕ of the Fresnel lenses and the period Tψ do not coincide but differ by no more than 5%. In each elementary area Qij subareas with phase function Φ(x,y) equal to a constant are distinguished, which are partially or fully filled with diffraction gratings of different orientation with periods of 0.35-1.0 µm. When the micro-optical system is illuminated by a point light source the observer sees over the entire area Q of the optical element the image given by the function ψ̅⁽¹⁾(x,y) when looking at the diffraction angles from 0° to +30°, another image given by the function ψ̅⁽²⁾(x,y) when looking at diffraction angles from 0° to -30°. The kinematic effect consists both in the alternation of the two images and the motion of the image fragments when the optical element is tilted. At the diffraction angles greater than 60° the observer sees another colored image over the entire surface of the micro-optical element.

The micro-optical system for forming visual images according to claim 5 of the invention is a flat single-layer reflective diffractive optical phase element forming an image of letters, digits, or symbols with kinematic motion effects. The area Q of the optical element, which is a rectangle |x| ≤ Lₓ/2 |y| ≤ L_{y}/2, is subdivided with period T_{ϕ} into elementary areas Qij centered at points (xi,yj), i = 1 ... N, j = 1 ... M, and, each elementary area Qij contains area Q̃ᵢⱼ with a size no greater than 250 µm centered at point (x'i,y'j) In each area Qij the microrelief of the flat optical element with phase function Φ(x,y), which is equal to zero at any point (x,y) that does not belong Q̃ᵢⱼ, is computed. At each point (x,y) of the elementary area Qij belonging to Q̃ᵢⱼ the phase function Φ(x,y) is computed by the formula Φ(x,y) = ϕᵢⱼ(x,y) · ψ(x+Δₓ,y+Δ_{y}), i = 1 ... N, j = 1 ... M. The function ϕᵢⱼ(x,y) = C [(x-x'ᵢ)²+(y-y'ⱼ)²], where C is a given parameter. The function ψ(x,y) is a periodic extension of the function ψ̅(x,y) with period Tψ; this function defines a binary representation of a letter, digit, or symbol. The parameters Δₓ and Δ_{y} are computed by the formulas Δₓ= (T_{ψ}/T_{ϕ}) · (xᵢ-x'ᵢ), Δ_{y}= (T_{ψ}/ T_{ϕ}) · (yⱼ-y'ⱼ), and the period T_{ϕ} does not coincide with the period T_{ψ} but differs from it by no more than 5%. In each elementary area Qij there are subareas with the phase function Φ(x,y) equal to a constant, which are partially or fully filled with diffraction gratings of different orientation with the periods of 0.35-1.0 µm. When the micro-optical system is illuminated by a point light source at a diffraction angle of less than 60° the observer sees an image on the entire area Q of the optical element consisting of light letters on a dark background. The kinematic effect consists in the motion of the letters when the optical element is tilted. At diffraction angles greater than 60° the observer sees another colored image on the entire surface of the micro-optical element.

The essence of the invention is explained by images, where Fig. 1 shows schematically the partitioning the area of the optical element into elementary areas Qij; Fig. 2 shows sections of phase functions ϕ(x,y) of axial Fresnel lenses; Fig. 3 shows schematically the arrangement of flat Fresnel lenses in the area Q of the optical element; Fig. 4 shows the binary function ψ̅(x,y) for the formation the optical element according to claim 1; Fig. 5 shows the binary function ψ(x,y); Fig. 6 illustrates the relationship between the periods T_{ϕ} and T_{ψ}; Fig. 7 shows a fragment of the phase function Φ(x,y) according to claim 1; Fig. 8 shows a fragment of the microrelief structure of claim 1; Fig. 9 shows the scheme of observation when the flat diffractive optical element is tilted; Fig. 10 shows the scheme of observation of the flat diffractive optical element when it it is tilted by angles ranging from 0° to +30° ("away from the observer"); Fig. 11 shows the scheme of observation of the flat diffractive optical element when it it is tilted by angles ranging from 0° to -30° ("toward the observer"); Fig. 12 shows the scheme of observation of the flat diffractive optical element for tilt angles greater than 60°; Fig. 13 shows the image that the observer sees at diffraction angles smaller than 60° according to claim 1; Fig. 14 shows the image that the observer sees at diffraction angles greater than 60°; Fig. 15 shows the binary function ψ̅⁽¹⁾(x,y) according to claim 2; Fig. 16 shows the binary function ψ̅⁽²⁾(x,y) according to claim 2; Fig. 17 shows a fragment of the binary function ψ(x,y); Fig. 18 shows images that the observer sees at diffraction angles less than 60° when the optical element is tilted according to claim 2 of the invention; Fig. 19 shows the binary functions ψ̅⁽¹⁾(x,y) (Fig. 19a) and ψ̅⁽²⁾(x,y) (Fig. 19b) that define the images according to claim 4; Fig. 20 shows the diagram of the formation of the functions ψ⁽¹⁾(x,y) and ψ⁽²⁾(x,y) in the areas Q⁽¹⁾ᵢⱼ and Q⁽²⁾ᵢⱼ; Fig. 21 shows a fragment of the phase function Φ(x,y) of the optical element according to claim 4; Fig. 22 shows a fragment of the microrelief structure of the optical element according to claim 4; Fig. 23 shows images that the observer sees when the optical element is tilted according to claim 4; Fig. 24 shows a scheme of the formation of the microrelief in the area Q̃ᵢⱼ according to claim 5; Fig. 25 shows a scheme of the partition of areas Qij into subareas Q̃ᵢⱼ; Fig. 26 shows a fragment of the phase function Φ(x,y) of the optical element in the area Qij of claim 5; Fig. 27 shows a fragment of the microrelief structure of the optical element in the area Qij of claim 5; Fig. 28 shows the binary functions ψ̅ ⁽¹⁾(x,y) (Fig. 28a) and ψ⁽²⁾(x,y) (Fig. 28b) that define the images according to claims. 4 and 5 of the invention; Fig. 29 shows a fragment of the phase function Φ(x,y) of the optical element according to claims. 4 and 5 of the invention; Fig. 30 shows a fragment of the microrelief structure of the optical element according to claims. 4 and 5 of the invention; Fig. 31 shows the images seen by the observer at different inclinations of the optical element.

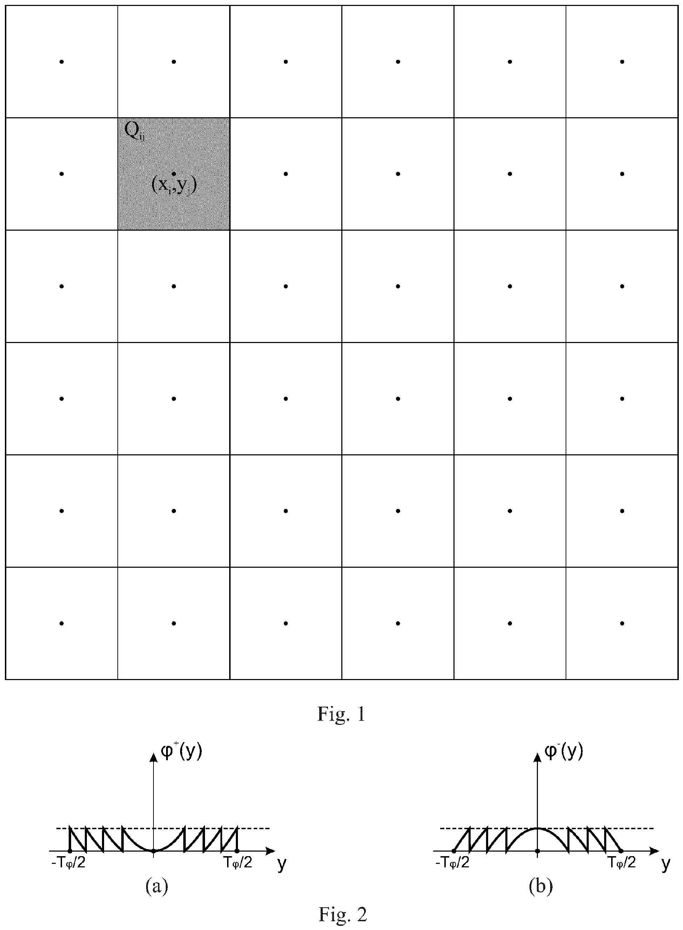

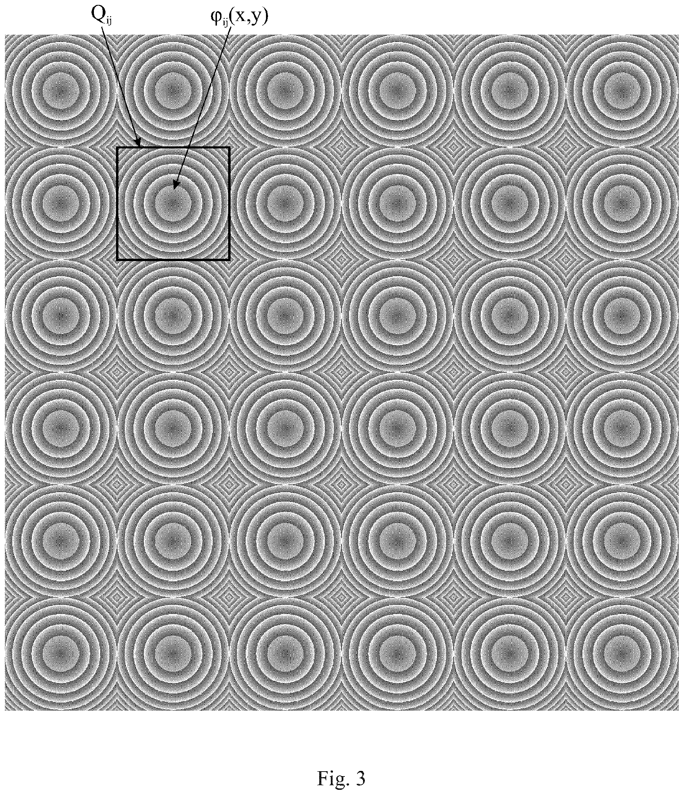

The micro-optical system claimed in the present invention is a flat reflecting single-layer optical phase element consisting of polyhedral diffractive elements in the form of fragments of axial Fresnel lenses and diffraction gratings. Each flat optical element is uniquely defined by its phase function Φ(x,y). (Goncharsky A.V., Goncharsky A.A. "Computer Optics. Computer Holography, Moscow State University Press, Moscow 2004, ISBN 5-211-04902-0). Defining the phase function defines completely the depth of microrelief h(x,y). In each claim the formula for computing the phase function Φ(x,y) in elementary areas Qij, i = 1 ... N, j = 1 ... M is explicitly presented. Fig. 1 shows a fragment of the area Q of the optical element subdivided with period T_{ϕ} into elementary areas Qᵢⱼ. Each elementary area Q̃ᵢⱼ is centered at the point with coordinates (xi,yj). The sizes of the elementary areas do not exceed 250 µm. The micro-optical system is formed using fragments of axial Fresnel lenses. Fig. 2 shows cross sections of the functions ϕ⁺(x,y) and ϕ⁻(x,y) at x = xᵢ. The phase functions of the Fresnel lenses are ϕ⁺(x,y) and ϕ⁻(x,y) for concave and convex lenses, respectively, and are given by the formula ϕᵢⱼ(x,y) = C [(x-xᵢ)²+(y-yⱼ)²], where C is a given parameter. The function ϕ⁺(x,y) corresponds to the parameter C > 0, the function ϕ⁻(x,y) corresponds to the parameter C < 0. The phase functions presented in Fig.2 correspond to the polyhedral phase elements (Goncharsky A.V., Goncharsky A.A. "Computer Optics. Computer Holography, Moscow State University Press, Moscow 2004, ISBN 5-211-04902-0). Fig. 3 shows the arrangement of flat Fresnel lenses in area Q of the optical element. In each elementary area Qij, an axial parabolic Fresnel lens centered at point (xi,yj) is computed. The depth of microrelief at the point (x,y) of each elementary area Qij in Fig. 3 is determined by the function ϕᵢⱼ(x,y) and is proportional to the degree of darkening at the point (x,y).

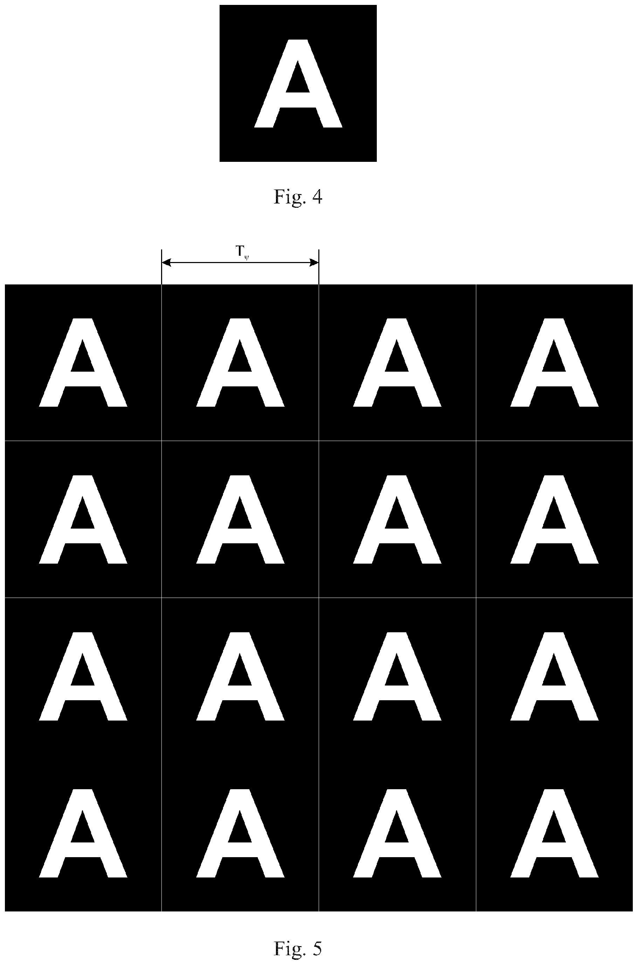

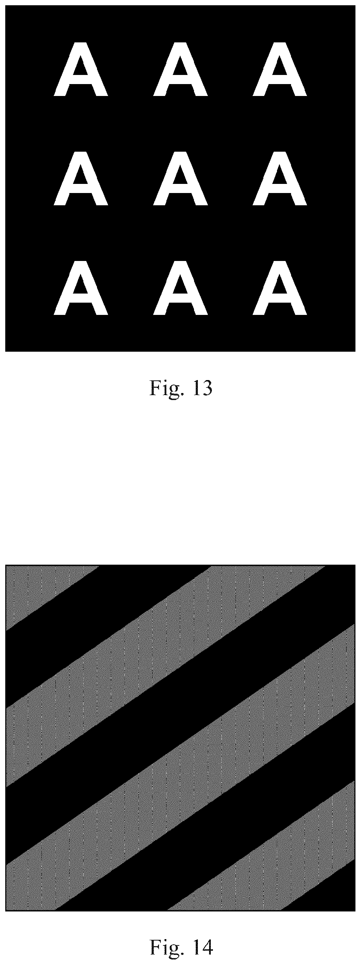

The binary function ψ (x,y), which is a periodic extension of the binary function ψ- (x,y) with period T_{ψ} shown in Fig. 4, is introduced for the formation of the visual image at diffraction angles less than 60°. The binary function ψ̅(x,y) specifies an image of a letter, digit, or symbol, whose periodic repetitions are seen by the observer throughout the area Q of the optical element made according to claim 1 when observed at diffraction angles less than 60° (Fig. 13). Fig. 5 shows a fragment of the function ψ (x,y). The periods T_{ϕ} and T_{ψ}, for the micro-optical systems according to claim 1 of the invention must satisfy the following conditions:
1. The periods T_{ϕ} and T_{ψ} must differ from each other.
2. The difference between the periods T_{ϕ} and T_{ψ} must not exceed 5%.

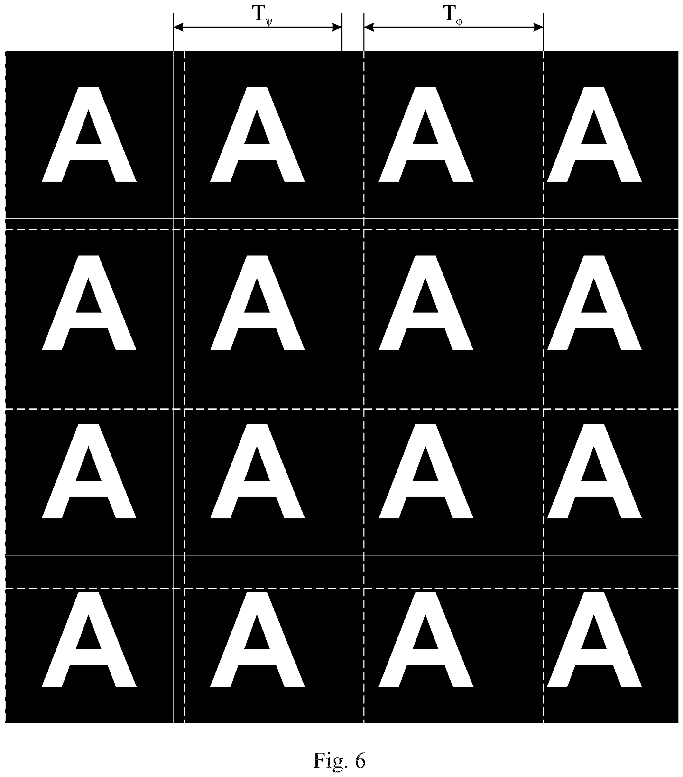

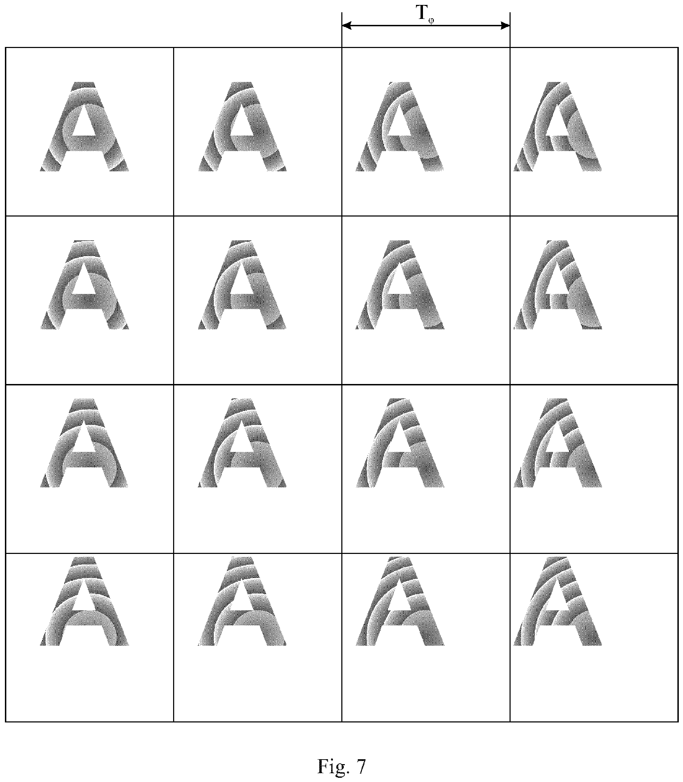

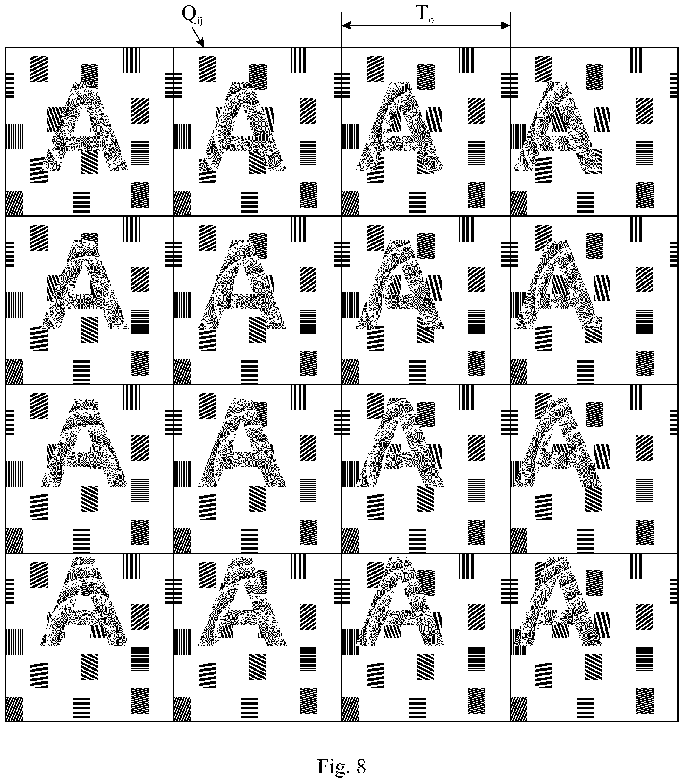

These conditions are fundamental for realization of the claimed micro-optical systems. For example, if the period T_{ϕ} coincides with T_{ψ}, it is impossible to form an image at diffraction angles θ < 60°. If T_{ϕ} and T_{ψ} differ greatly, the kinematic effect of motion, as well as the size of letters, digits, or symbols, becomes negligible. Fig. 6 illustrates the relationship between the periods T_{ϕ} and T_{ψ}. The white dashed lines denote the partition into elementary areas Q̃ᵢⱼ with period T_{φ}, and the solid lines denote the functions ψ̅(x,y) extended with period T_{ψ} over the entire area Q of the optical element. Fig. 7 shows a fragment of the phase function Φ(x,y) = ϕᵢⱼ(x,y) · ψ(x,y) according to claim 1. The thin lines denote the partitioning of the area Q of the optical element into elementary areas Qij with period T_{ϕ}. In the case of a flat reflecting diffractive optical element and normal incidence of light onto the optical element the depth of microrelief is computed as h(x,y) = 0.5 Φ(x,y). (Goncharsky A.V., Goncharsky A.A. "Computer Optics. Computer Holography, Moscow State University Press, Moscow 2004, ISBN 5-211-04902-0). The depth of microrelief at each point (x,y) of the optical element is proportional to the degree of darkening in Fig. 7. The maximum depth of microrelief for multigrade flat reflective micro-optical elements does not exceed 0.3 µm. The function Φ(x,y) defines the image visible to the observer at diffraction angles less than 60°. Fragments of diffraction gratings with periods of 0.35-1.0 µm are used to form the image at diffraction angles greater than 60°. Fig. 8 shows a fragment of the microrelief structure of an optical element manufactured according to claim 1. As is evident from Fig. 8, the fragments of diffraction gratings are located in areas where the phase function is equal to a constant. In Fig. 7, these areas are shown in white. The area occupied by the diffraction gratings in Fig. 8 is about 20% of the area of each elementary area Qij.

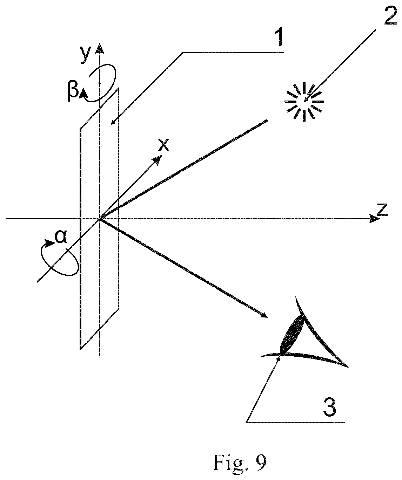

Fig. 9 shows schematically the arrangement of the micro-optical system 1 with respect to the Oxy plane. The micro-optical system is illuminated by point source 2 located in the Oyz plane. The optical element can rotate about the Ox axis by angle α. The angle of rotation of the optical element around the Oy axis is denoted by β. The eye of observer 3 is in the Oyz plane. The optical element is tilted upward and downward about the Ox axis and turned left and right about the Oy axis.

The image at diffraction angles of less than 60° is formed using fragments of axial Fresnel lenses with a parabolic phase function. An important parameter characterizing flat axial Fresnel lenses is the size of outermost Fresnel zones. In the claimed invention the size of the outermost Fresnel zones does not exceed 1.2 µm. Due to the fact that the size of the outermost Fresnel zones does not exceed 1.2 µm, a broad beam pattern of the light reflected from the micro-optical system is obtained. Fresnel lens elements produce an image consisting of periodically repeating light letters, digits, or symbols on a dark background. The kinematic effect consists in the motion of the image as the micro-optical system is tilted up and down and left and right in the range of α and β ±30°.

Fresnel lens fragments are not visible to the human eye because their size does not exceed 250 µm. The use of multigrade optical elements ensures that the behavior of the image motion does not change when passing through the zero order of diffraction, which corresponds to the transition from positive to negative tilt angles of the optical element.

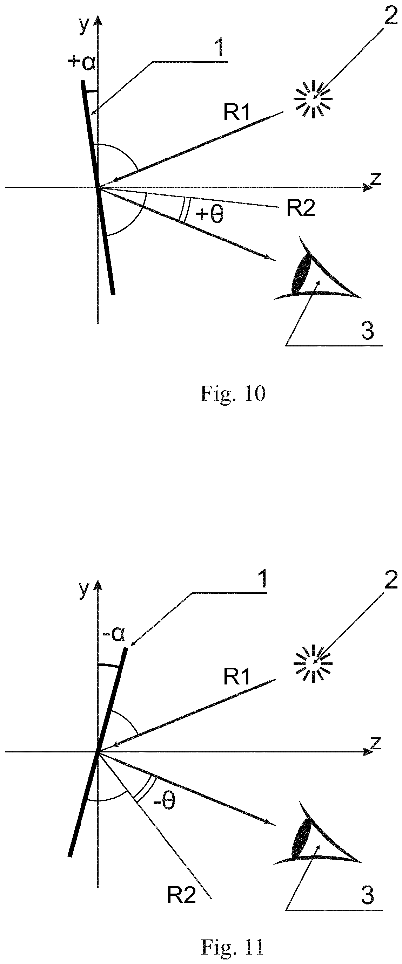

Fig. 10 shows the scheme of observation of micro-optical system 1 in the range of diffraction angles less than 60°. The diffraction angle θ is measured as the angle between the zero order of diffraction, designated in Fig. 9 as ray R2, and the direction toward the observer's eye 3. The direction of the beam R2 coincides with the direction of the beam reflected from the optical element from light source 2 (beam R1) if the phase function of the optical element is constant, that is, if the optical element is a mirror. By changing the inclination of the optical element with respect to the Oy axis (angle α), we thereby change the diffraction angle θ(α) = 2α. When the optical element is tilted by an angle α < 30°, the diffraction angle is less than 60°. When the diffraction angle is less than 60°, the observer sees the image formed by the micro-optical system according to claims 1, 2, 3 over the entire area of optical element Q according to claims 1, 2 and 3 of the invention, and this image consists of periodically repeating letters with a kinematic effect of motion when the optical element is tilted up and down and left and right. The scheme of observation in Fig. 10 illustrates a tilt of the micro-optical system "away from itself" when the diffraction angles are positive (+θ), and in Fig. 11, a tilt "toward itself" when the diffraction angles are negative (-θ). When the micro-optical system is observed according to claim 4 of the invention in accordance with the diagrams shown in Figs. 10 and 11, the observer sees two different images consisting of periodically repeated symbols with kinematic motion effects.

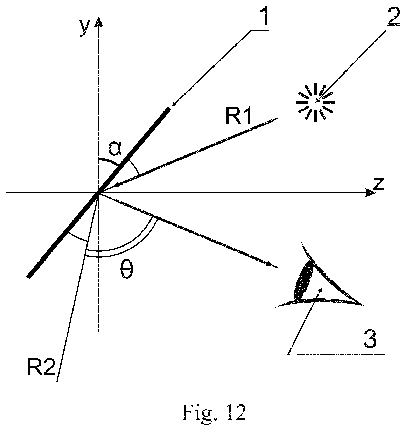

Fig. 12 shows the scheme of observation of the micro-optical system in the case of large diffraction angles θ > 60°. The diffraction angle θ is measured as the angle between the direction toward the observer 3 and the zero order of diffraction R2. Greater tilts of the optical element correspond to greater angles α and consequently to greater diffraction angles θ. The microrelief parameters of the micro-optical system are chosen so that at diffraction angles greater than 60° the image is formed by diffraction gratings. In the case of partial filling of areas Q̃ᵢⱼ with gratings the sizes of diffraction gratings do not exceed 50 µm, and hence the grating fragments are not visible to the observer.

When the micro-optical system according to claim 1 is illuminated by a point light source and the diffraction angle is less than 60°, the observer sees over the entire area Q of the optical element the image shown in Fig. 13, which consists of periodically repeated letters, digits, or symbols with a kinematic effect of motion. At diffraction angles greater than 60° the observer sees a different colored image. Fig. 14 shows a variant of such color image in false colors. Black color corresponds to red and grey to green.

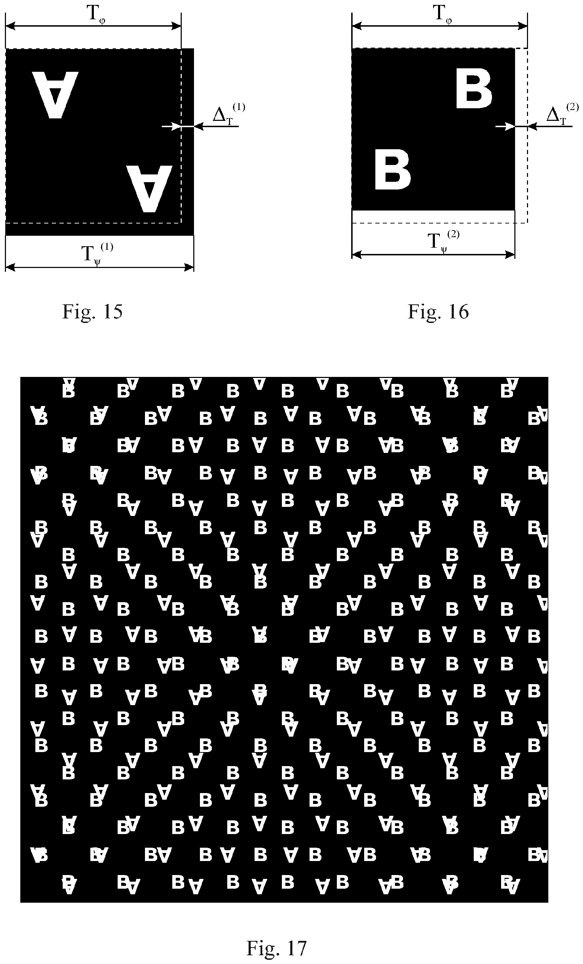

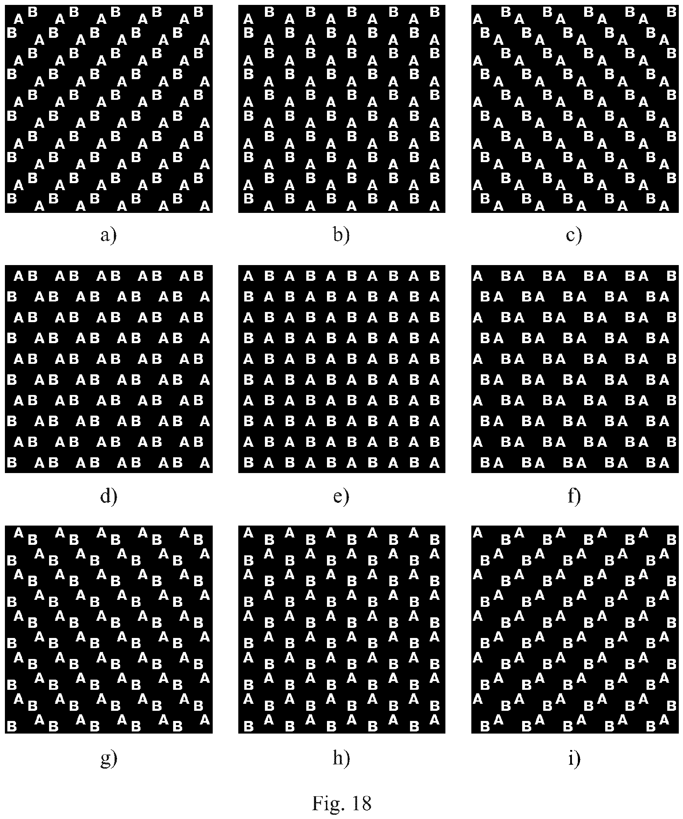

The amplitude of the kinematic effects of image motion can be doubled by using two different images whose fragments move towards each other when the optical element is tilted. This approach is implemented in claims 2 and 3 of the invention. Fig. 15 shows a binary function ψ̅⁽¹⁾(x,y) that defines the first image, and Fig. 16 shows the binary function ψ̅⁽²⁾(x,y) that defines the second image. The periods T_{ψ}⁽¹⁾ and T_{ψ}⁽²⁾ differ from each other. In order to ensure that the fragments of the first and second images move in mutually opposite directions, the parameters Δ_{T}⁽¹⁾= T_{ψ}⁽¹⁾- T_{ϕ} and Δ_{T}⁽²⁾= T_{ψ}⁽²⁾- T_{ϕ} need to have opposite signs. In this case one of the images must be rotated by 180°. The images consist of checkerboard-arranged letters in order to minimize the overlap of letters when the optical element is tilted. Fig. 17 shows a fragment of the binary function ψ(x,y), which is the logical addition of the binary functions ψ⁽¹⁾(x,y) and ψ⁽²⁾(x,y), which, in turn, are periodic extensions of the functions ψ̅⁽¹⁾(x,y) and ψ̅⁽²⁾(x,y) with the periods T_{ψ}⁽¹⁾ and Tψ⁽²⁾ , respectively. Fig. 18 shows the images visible to the observer at small diffraction angles of less than 60° in the entire area Q of the optical element. Fig. 18(e) corresponds to the zero order of diffraction. Fig. 18(a) corresponds to left-upward tilt, (b) to upward tilt, (c) to right-upward tilt, (d) to leftward tilt, (f) to rightward tilt, (g) to left-downward tilt, (h) to downward tilt, (i) to right-downward tilt. The letters "A" and "B" move in mutually opposite directions relative to the optical element and relative to each other. Thus the relative displacement of the letters "A" and "B" doubles. At diffraction angles greater than 60° the observer sees on the entire surface of the micro-optical element another color image, as exemplified in Fig. 14.

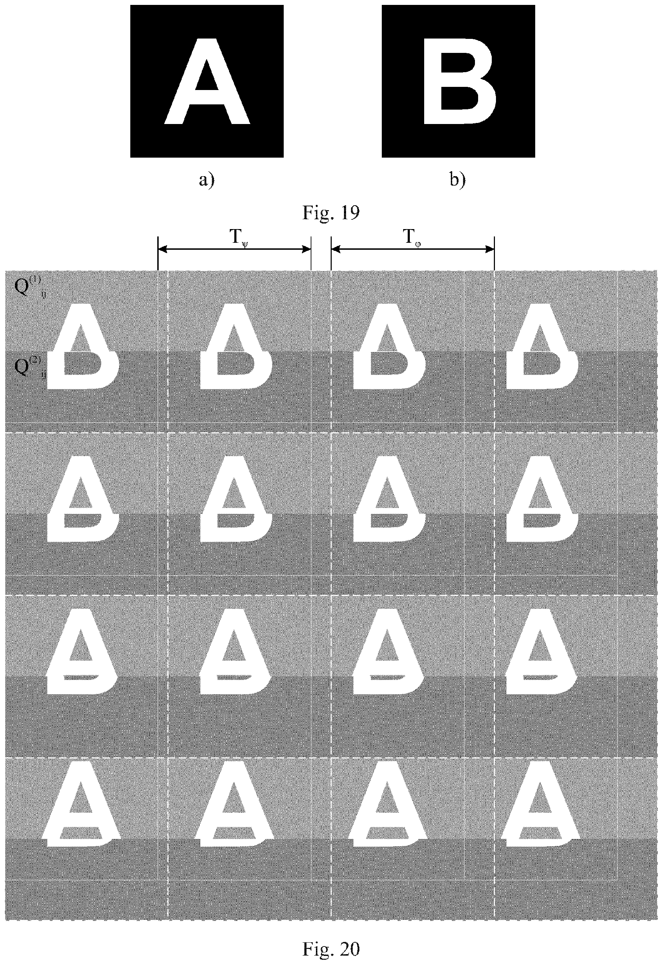

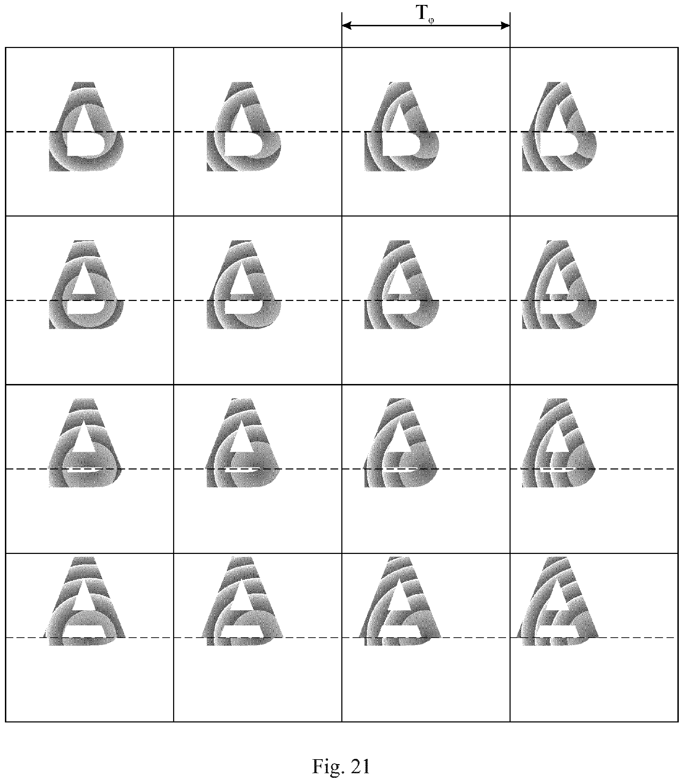

The micro-optical system according to claim 4 creates the effect of alternation of two binary images visible to the observer when the optical element is tilted. The first binary image is defined by the binary function ψ̅⁽¹⁾(x,y) (Fig. 19a), and the second binary image is defined by the binary function ψ̅⁽²⁾(x,y) (Fig. 19b). The binary function ψ⁽¹⁾(x,y) is the periodic extension of the binary function ψ̅⁽¹⁾(x,y) with the period T_{ψ}; this latter function is responsible for the formation of the image visible to the observer when the optical element is tilted "away". The binary function ψ̅⁽²⁾(x,y) is the periodic extension of the binary function ψ̅⁽²⁾(x,y) with the period T_{ψ}; this latter function is responsible for the formation of the image visible to the observer when the optical element is tilted "toward itself". Fig. 20 shows a fragment of the partitioning with the period T_{ϕ} of area Q of the optical element into elementary areas Q̃ᵢⱼ each of which is, in turn, partitioned into two subareas Q⁽¹⁾ᵢⱼ and Q⁽²⁾ᵢⱼ. In areas Q⁽¹⁾ᵢⱼ the relation y> yj is fulfilled, and in areas Q⁽²⁾ᵢⱼ the relation y< yj is fulfilled. Thus, the subareas Q⁽¹⁾ᵢⱼ and Q⁽²⁾ᵢⱼ contains the upper and lower half, respectively, of the Fresnel lens defined by the phase function ϕᵢⱼ(x,y) in area Qij. Fig. 21 shows a fragment of the phase function Φ(x,y), which at a point (x,y) of each elementary area Qij is computed by the formula Φ(x,y) = ϕᵢⱼ(x,y) · ψ⁽¹⁾(x,y) for points of area Q⁽¹⁾ᵢⱼ, and by the formula Φ(x,y) = ϕᵢⱼ(x,y) · ψ⁽²⁾(x,y) for points of area Q⁽²⁾ᵢⱼ, i = 1 ... N, j = 1 ... M.

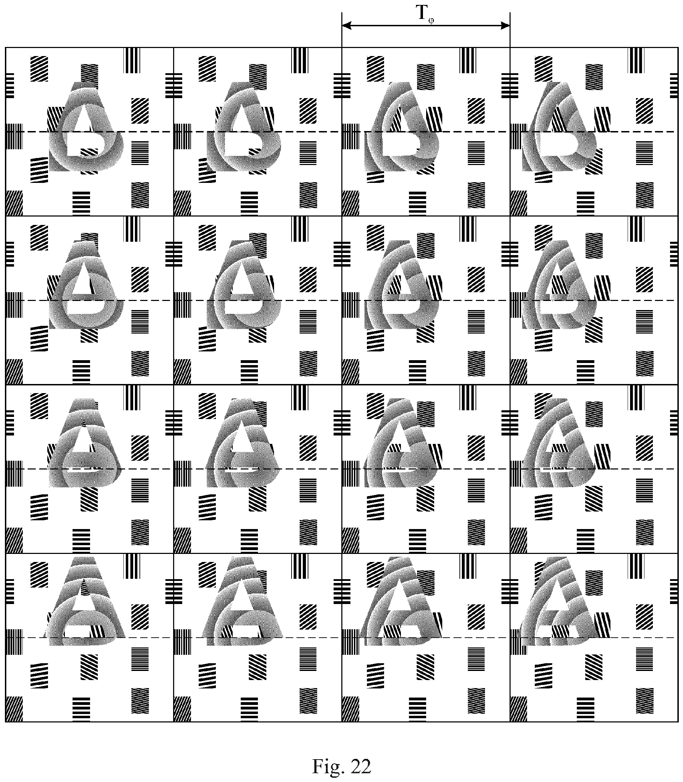

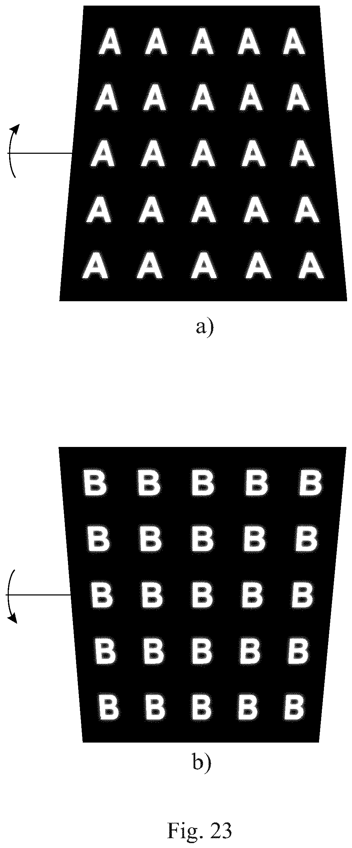

In each elementary area Qij subareas with the phase function Φ(x,y) equal to a constant are distinguished, which are marked in Fig. 21 by white color, and which are partially or completely filled with diffraction gratings of different orientation with periods ranging from 0.35 to 1.0 µm as shown in Fig. 22. When the micro-optical system is illuminated by a point light source at a diffraction angle of 0° to +30° (self-tilting) the observer sees in the entire area Q of the optical element the image shown in Fig. 23(a), defined by the function ψ⁽¹⁾(x,y), and at angles from 0° to -30° (self-tilting) another image, shown in Fig. 23(b), defined by the function ψ⁽²⁾(x,y). The kinematic effect consists both in alternation of two images in the case of the vertical transition through the zero order of diffraction, and in the motion of image fragments when the optical element is tilted. At diffraction angles greater than 60° the observer sees another colored image on the entire surface of the micro-optical element, as exemplified in Fig. 14.

The micro-optical systems according to claims. 1-4 form images visible to the observer and having various kinematic motion effects. In the preferred embodiment of claim 5, the Fresnel lens does not fill the entire area Qij, but only its subarea Q̃ᵢⱼ. The variant according to claim 5 of the invention allows varying the relative motions of the image fragments.

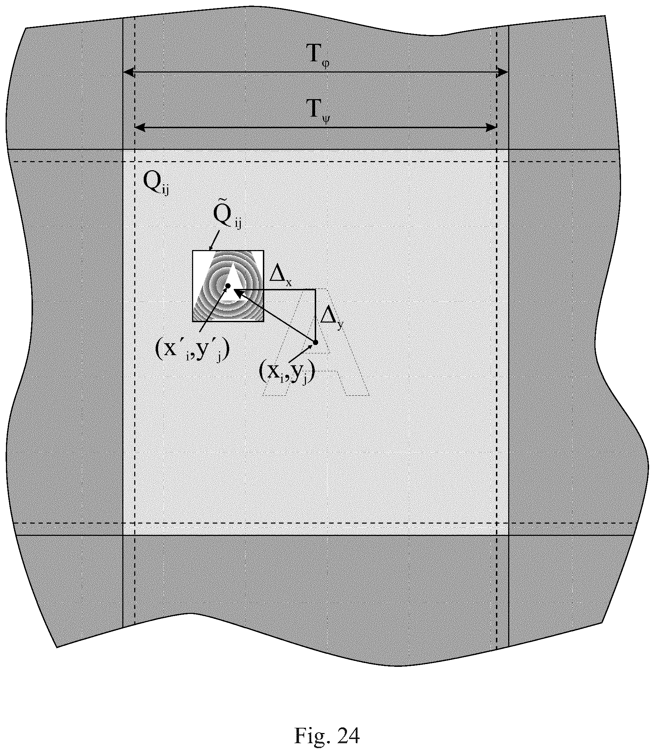

In claim 5, the area Q of the optical element is partitioned with period T_{ϕ} into elementary areas Qij. As shown in Fig. 24, each elementary area Qij centered at (xi,yj), i = 1 ... N, j = 1 ... M, contains area Q̃ᵢⱼ with the size no greater than 250 µm and centered at the point (x'i,y'j). In each area Qij, a flat optical element is computed, with the phase function Φ(x,y) that is equal to zero for any point (x,y) not belonging to Q̃ᵢⱼ. At each point (x,y) of the elementary area Qij belonging to Qij the phase function Φ(x,y) is computed by the formula Φ(x,y) = ϕᵢⱼ(x,y) · ψ(x+Δₓ,y+Δ_{y}), i = 1 ... N, j = 1 ... M, where ϕᵢⱼ(x,y) = C [(x-x'ᵢ)²+(y-y'ⱼ)²], where C is a given parameter. The function ψ(x,y) is the periodic extension with period T_{ψ} of the function ψ̅(x,y) that defines the binary representation of a letter, digit, or symbol; the parameters Δx and Δy are computed by the formulas Δₓ= (T_{ψ}/ T_{ϕ}) · (xᵢ-x'ᵢ), Δ_{y}= (T_{ψ}/ T_{ϕ}) · (yⱼ-y'ⱼ). These parameters take into account the displacement of the center of area Qij with respect to the center of the elementary area Qij. The period T_{ϕ} and the period T_{ψ} do not coincide, but differ by no more than 5%. Fig. 24 shows the relation between the periods. The letter "A" with the dashed outline and the dashed lines represent a conventional representation of the function ψ̅(x,y) shown in Fig. 4 for the case when the centers of Q̃ᵢⱼ and Qij coincide. The vector Δ = (Δx,Δy) denotes the offset of the function ψ(x,y) necessary for any area Q̃ᵢⱼ to construct the same image.

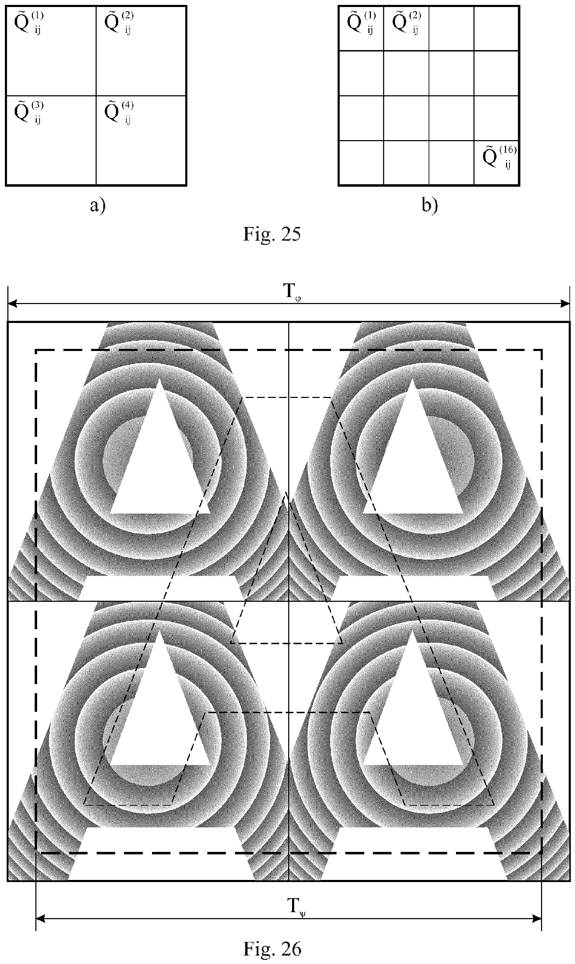

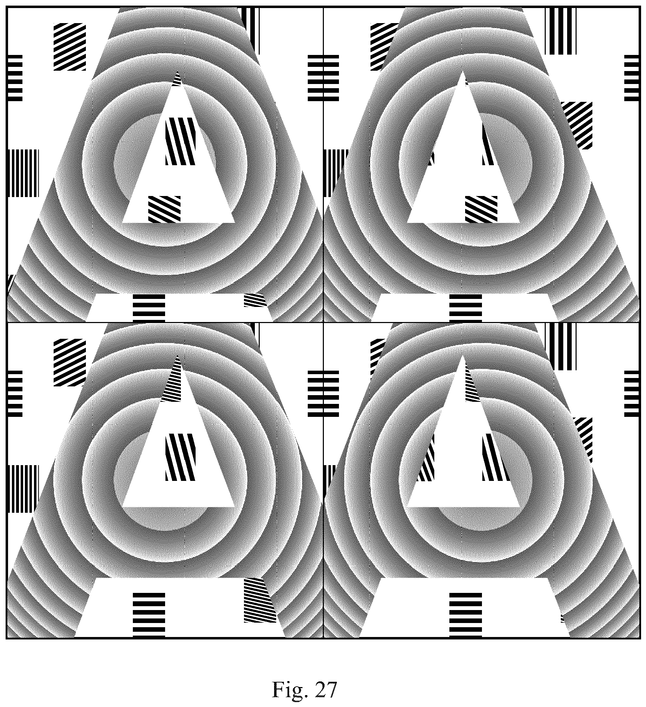

The areas Qij may partially or completely fill the area Qij. From an energy point of view, the best option is if the areas Q̃ᵢⱼ fill the entire area Qij as shown in Fig. 25. In Fig. 25(a), the area Qij is subdivided into four subareas, and in Fig. 25(b), into sixteen subareas. Fig. 26 shows the phase function Φ(x,y) in area Qij for the variant of partitioning shown in Fig. 25(a). In each area Qij subareas in which the phase function is equal to a constant are highlighted. They are marked in white in Fig. 26. Such areas are partially or completely filled with diffraction gratings of various orientations with periods of 0.35-1.0 µm, which form a colored image visible to the observer at large diffraction angles greater than 60°, as shown in Fig. 14. Fig. 27 shows the microrelief structure in area Qij.

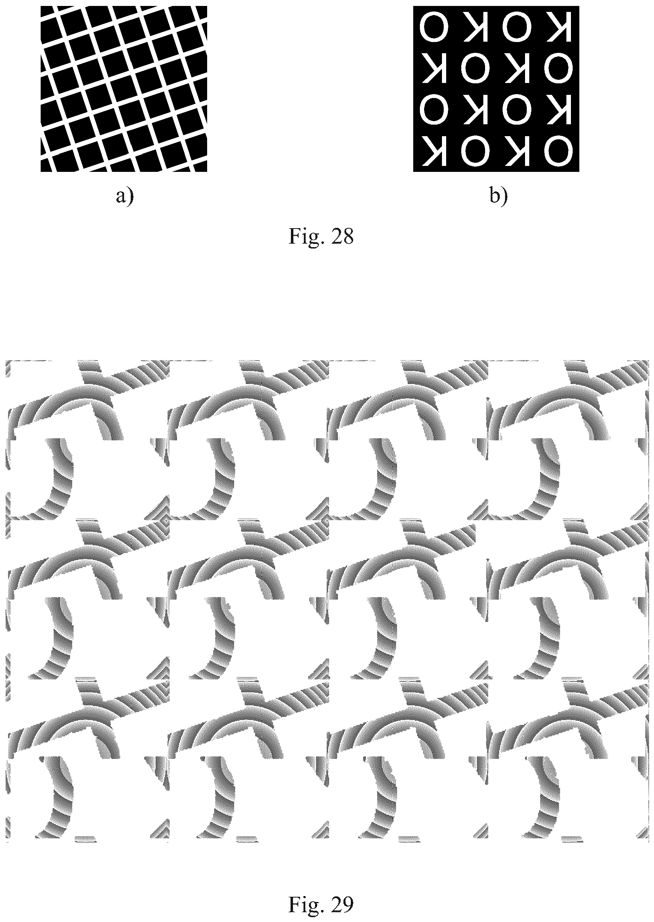

The preferred embodiment according to claim 5 of the invention can be used both to form the kinematic motion of the image fragments and the image alternation effect according to claims 1-4 of the invention. The generated images do not necessarily contain letters, digits, or symbols. Examples of acceptable images are shown in Fig. 28. The following is an example of a micro-optical system according to claim 5 of the invention producing the above kinematic effects, including the effect of the alternation of two images. Fig. 28(a) shows the binary function ψ̅⁽¹⁾(x,y), and Fig. 28(b) shows the binary function ψ̅⁽²⁾(x,y).

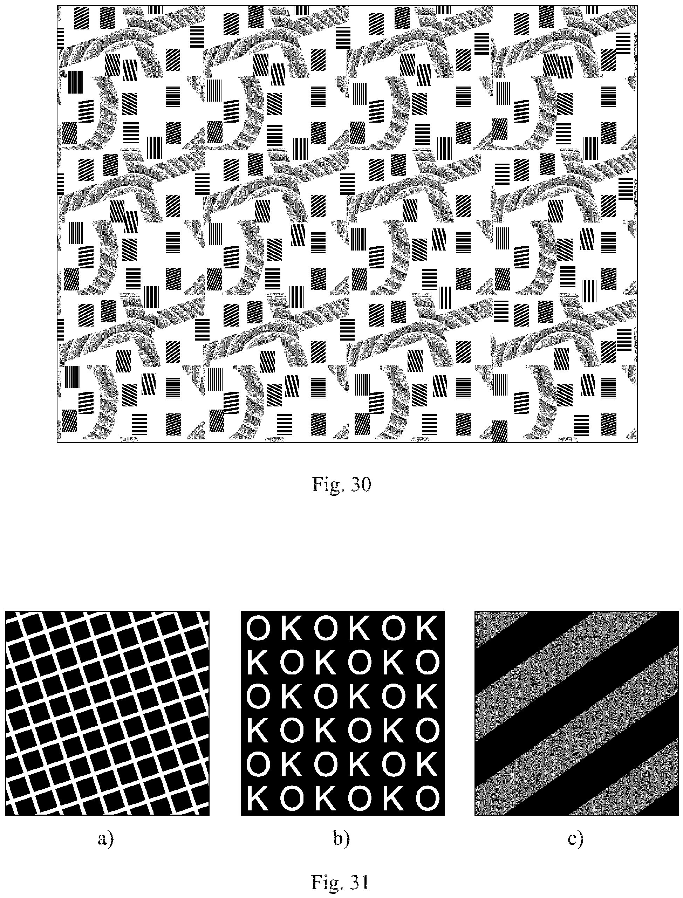

Fig. 29 shows a fragment of the phase function Φ(x,y). The white color shows areas where the phase function Φ(x,y) is equal to a constant. Such areas are completely or partially filled with diffraction gratings of various orientations with periods of 0.35-1.0 µm, which form a color image visible to the observer at large diffraction angles greater than 60°. The micro-optical system whose microrelief structure is shown in Fig. 30 forms both the image alternation effect and the kinematic effect of motion of image fragments. Images with kinematic motion effects are shown in Fig. 31(a) (when tilted "away") and in Fig. 31(b) (when tilted "toward itself"). Fig. 31(c) shows a false-color image as seen at large diffraction angles greater than 60°. Here black and gray stay for red and green, respectively.

Central to the technology is the recording of the original of the micro-optical system. The micro-optical systems proposed in the claimed invention are manufactured by means of the electron-beam technology. Electron-beam lithography has a very high resolution (0.1 µm or better) and provides the necessary precision of microrelief production on the order of 20 nanometers. Currently, hundreds of companies are working in the field of manufacturing of security holograms. Practically all of them use the optical technologies for recording of the originals of security elements. The optical methods of synthesizing originals include the KineMax, Kinegram, etc. (van Renesse, Rudolf L, Optical Document Security, 3rd ed. British Library Cataloguing in Publication Data, 2005, ISBN 1-58053-258-6, van Renesse, Rudolf L, Optical Document Security, 2nd ed. British Library Cataloguing in Publication Data, 1998, ISBN 0-89006-982-4). The original of the claimed micro-optical system cannot be manufactured using the technologies described. The electron-beam technology is not widespread and is very knowledge-intensive, thereby securely protecting the micro-optical systems claimed in the utility model from against counterfeiting.

The main differences of the claimed micro-optical system from the prototype are as follows:
1. The claimed micro-optical system differs from the prototype in the structure of the optical element. The prototype uses one-dimensional structures ψ(y) to form the microrelief. In the claimed invention two-dimensional structures ψ(x,y) are used to form the microrelief.
2. The structure of the optical element in the prototype makes it possible to form only images consisting of black and white stripes. Kinematic effects consist in the motion of black and white stripes when the optical element is tilted. The structure of the micro-optical system in the claimed invention makes it possible to form images that consist of letters, digits, or symbols with kinematic effects of motion of image fragments when the optical element is tilted.
3. Unlike the prototype, the structure of the optical element in the claimed invention makes it possible to produce the effect of the alternation of two images when observed at diffraction angles smaller than 60°.
4. In the prototype the kinematic effects of motion of image fragments at diffraction angles smaller than 60° are observed when the optical element is tilted upward/downward. Unlike the prototype, in the claimed invention kinematic effects are observed in the case of both up/down and right/left movements.

The combination of the claimed features provides the achievement of the claimed technical result.

As an example of the implementation of the invention, four micro-optical systems in the form of reflective single-layer optical elements phase ranging in size from 20×20 mm² to 40×40 mm² were fabricated. Concave square Fresnel lenses with a parabolic phase function were used to form the microrelief. The size of the Qij squares was on the order of 100×100 µm². The minimum size of the outermost zone of the Fresnel lenses is on the order of 1.2 µm. The number of Fresnel zones is of the order of 50. The size of the central zone is about 10 µm. Figs. 9-11 show the observation scheme of the micro-optical system at diffraction angles θ < 60°, and Fig. 12 shows the observation scheme at diffraction angles θ > 60°. Diffraction gratings with periods of 0.45 and 0.55 µm were used to form images at large diffraction angles. The size of the diffraction grating fragments is 20 to 30 µm².

Electron-beam lithography was used to produce the originals of the micro-optical systems, and electrotyping technique was used to produce the master matrices of the micro-optical. The maximum depth of microrelief did not exceed 0.3 µm. After a standard holographic multiplication procedure up to a size of 152.4×152.4 mm², the multiplicated master matrices were fabricated, which were then used to produce working matrices for rolling. 20 cm wide holographic foil was produced using standard rolling equipment. After applying adhesive layers and cutting, samples of reflective holographic stickers ranging in size from 20×20 mm² to 40×40 mm² were fabricated.

### Example 1.

As an example of the implementation of the claimed invention according to claim 1, a micro-optical system in the form of a 20×20 mm² protective holographic sticker has been manufactured. Fig. 1 shows the partitioning scheme of the optical element into elementary areas Qij with the size of 100×100 µm². The phase function ϕ⁺ᵢⱼ(x,y) shown in Fig. 2(a) was used to form concave Fresnel lenses with a focal length of 200 µm. The binary function ψ̅(x,y) that defines the binary image of the letter "A" is given in Fig. 4. The difference between the periods T_{ϕ} = 100 µm and T_{ψ} = 96 µm was 4%. The phase function Φ(x,y) is shown in Fig. 7. The microrelief structure is shown in Fig. 8. Fig. 13 shows the monochromatic image with kinematic motion effects visible at diffraction angles smaller than 60°. The monochromatic image consists of periodically repeated letters "A" visible over the entire area Q of the optical element and moving when the optical element is tilted. Fig. 14 shows the color image visible at large diffraction angles greater than 60°.

### Example 2.

As an example implementation of the claimed invention according to claims. 2, 3 and 5, a micro-optical system in the form of a 20×20 mm² protective holographic sticker was fabricated. Fig. 1 shows the scheme of the partitioning of the optical element into elementary areas Qij with the size of 200×200 µm². Each elementary area Qij was partitioned into 4 subareas, each with a size of 100×100 µm² as shown in Fig. 25(a). The phase function ϕ⁺ᵢⱼ(x,y) shown in Fig. 2(a) was used to form concave Fresnel lenses with a focal length of 200 µm. The binary function ψ̅⁽¹⁾(x,y) that defines the binary image of "A" is shown in Fig. 15. The binary function ψ̅⁽²⁾(x,y) that defines the binary image of "B" is shown in Fig. 16. The periods are equal to T_{ϕ} = 200 µm, T_{ψ}⁽¹⁾ = 208 µm and T_{ψ}⁽²⁾ = 192 µm. The period-difference parameters are equal to Δ_{T}⁽¹⁾= T_{ψ}⁽¹⁾-T_{ϕ}= 8 µm and Δ_{T}⁽²⁾= T_{ψ}⁽²⁾- T_{ϕ} = -8 µm, which is equal to 4% of T_{ϕ}. Fig. 18 shows the monochromatic image with kinematic motion effects visible at diffraction angles smaller than 60°. The monochromatic image consists of periodically repeating letters "A" and "B" visible in the entire area Q of the optical element and moving in mutually opposite directions when the optical element is tilted. Fig. 14 shows the color image visible at large diffraction angles greater than 60°.

### Example 3.

As an example embodiment of the claimed invention according to claims. 4 and 5, a micro-optical system in the form of a 20×20 mm² holographic protective sticker was fabricated. Fig. 1 shows the scheme of the partitioning of the optical element into elementary areas Qij with the size of 200×200 µm². Each elementary area Qij was partitioned into 4 subareas, each with a size of 100×100 µm² as shown in Fig. 25(a). The phase function ϕ⁺ᵢⱼ(x,y) shown in Fig. 2(a) was used to form concave Fresnel lenses with a focal length of 200 µm. The binary function ψ̅⁽¹⁾(x,y) that defines the binary image of "A" is shown in in Fig. 19(a). The binary function ψ̅⁽²⁾(x,y) that defines the binary image of "B" is shown in in Fig. 19(b). The difference of the periods T_{ϕ} = 200 µm and T_{ψ} = 208 µm is equal to 4%. Each subarea domain Q̃ᵢⱼ was subdivided into areas Q⁽¹⁾ᵢⱼ 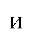 Q⁽²⁾ᵢⱼ containing the upper and lower halves of the Fresnel lens. Fig. 23(a) shows the monochromatic image with kinematic motion effects visible at diffraction angles ranging from 0°to +30°, and Fig. 23(b) shows the monochromatic image with kinematic motion effects visible at diffraction angles ranging from 0°to -30°. The monochromatic image consists of periodically repeating letters "A" visible when the optical element is tilted "away" and repeating letters "B" visible when the optical element is tilted "toward itself' in the entire area Q of the optical element and moving when the optical element is tilted. The change of images occurs when the sign of the diffraction angle is reversed, i.e., when the vertical transition through the zero order of diffraction occurs. The color image visible at large diffraction angle greater than 60° is shown in Fig. 14.

### Example 4.

As an example embodiment of the claimed invention according to claims. 4 and 5 of the invention, a micro-optical system in the form of a 40×40 mm² holographic protective sticker was fabricated. Fig. 1 shows the scheme of the partitioning of the optical element into elementary areas Qij with the size of 433.6×433.6 µm². Each elementary area Qij was partitioned into 16 subareas Q̃ᵢⱼ, each with a size of 108.4×108.4 µm² as shown in Fig. 25(b). The phase function ϕ⁺ᵢⱼ(x,y) shown in Fig. 2(a) was used to form concave Fresnel lenses with a focal length of 202.4 µm. Fig. 28(a) shows the binary function ψ̅⁽¹⁾(x,y) that defines the binary grid image. Fig. 28(b) shows the binary function ψ̅⁽²⁾(x,y) that defines the binary image of the "OK" letters. The difference between the periods T_{ϕ} = 433.6 µm and T_{ψ} = 442 µm was equal to 1.94%. Each subarea Q̃ᵢⱼ is subdivided into areas Q⁽¹⁾ᵢⱼ and Q⁽²⁾ᵢⱼ containing the upper and lower halves of the Fresnel lens. Fig. 29 shows the phase function Φ(x,y). Fig. 20 shows the microrelief structure. Fig. 31(a) shows the monochromatic image with kinematic motion effects seen when observed according to the scheme given in Fig. 10 at diffraction angles ranging from 0° to +30°, and Fig. 31(b) shows the image seen when observed according to the scheme given in Fig. 11 at diffraction angles ranging from 0° to -30°. The monochromatic image consists of a grid when the optical element is tilted "away from itself" and of periodically repeating letters "O K" when tilted "toward itself", visible over the entire area Q of the optical element, and moving when the optical element is tilted. The images change when the sign of the diffraction angle is reversed, i.e., when the vertical transition through the zero order of diffraction occurs. Fig. 31(c) shows the color image in false colors visible at large diffraction angles greater than 60°. Black color corresponds to red, and gray to green.

The manufactured sticker samples demonstrated high efficiency of the technology proposed in the invention application for the production of protective holographic elements. The visual images are easy to control. The micro-optical systems are reliably protected against counterfeiting. The micro-optical systems claimed in the invention can be used to protect banknotes, securities, documents, excise stamps, and plastic cards.

## Claims

1. Micro-optical system for the formation of visual images, represented by a flat single-layer reflective diffractive optical phase element that forms the image of letters, digits, or symbols with kinematic effects of motion, distinguished in that the area Q of the optical element in the form of the rectangle |x| ≤ Lₓ/2 |y| ≤ L_{y}/2 is partitioned with period T_{ϕ} into elementary areas Qij with the size no greater 250 µm and centered at points (xi,yj), i = 1 ... N, j = 1 ... M. In each area Qij the microrelief of the flat optical element with the phase function Φ(x,y) is computed, which at the point (x,y) of each elementary area Qij is computed by the formula Φ(x,y) = ϕᵢⱼ(x,y) · ψ(x,y), i = 1 ... N, j = 1 ... M, where ϕᵢⱼ(x,y) is the phase function of the axial Fresnel lens centered at the point (xi,yj) and computed by the formula ϕᵢⱼ(x,y) = C [(x-xᵢ)²+(y-yⱼ)²], where C is a given parameter, and the function ψ(x,y) is the periodic extension with period T of the function ψ̅(x,y) that defines the binary representation of a letter, digit, or symbol. The period T_{ϕ} of the Fresnel lens and the period T_{ψ} do not coincide but differ no more than by 5%. In each elementary area Qij subareas are distinguished where the phase function Φ(x,y) is equal to a constant, which are partially or fully occupied by diffraction gratings of various orientations with periods of 0.35-1.0 µm. The arrangement is such that when the micro-optical system is illuminated by a point light source at diffraction angles less than 60° the observer sees on the entire area Q of the optical element the image consisting of light letters on dark background, and the kinematic effect consists in the motion of letters when the optical element is tilted, and at diffraction angles greater than 60° the observer sees another colored image on the entire area of the micro-optical element.

2. A micro-optical system for the formation of visual images, representing a flat single-layer reflective phase diffractive optical element to form an image of letters, digits or symbols with kinematic effects of motion, **characterized in that** the area Q of the optical element, representing a rectangle |x| ≤ Lₓ/2 |y| ≤ L_{y}/2 is divided with a period T_{ϕ} into elementary areas Qij, not more than 250 µm in size with centers at points (xi,yj), i = 1 ... N, j = 1 ... M, in each region Qij the microrelief of the plane optical element with the phase function Φ(x,y) is computed, which at the point (x,y) of each elementary area Qij is computed by the formula Φ(x,y) = ϕᵢⱼ(x,y) · ψ(x,y), where ϕᵢⱼ(x,y) is the phase function of the axial Fresnel lens centered at point (xi,yj) and computed by the formula ϕᵢⱼ(x,y) = C [(x-xᵢ)²+(y-yⱼ)²], where C is a given parameter, and the binary function ψ(x,y) is the logical addition of the binary functions ψ⁽¹⁾(x,y) and ψ⁽²⁾(x,y), which are periodic extensions with periods Tψ⁽¹⁾ and Tψ⁽²⁾ of the functions ψ̅⁽¹⁾(x,y) and ψ̅⁽²⁾(x,y), respectively. The function ψ̅⁽¹⁾(x,y) defines the first binary image of a letter, digit, or symbol, and the function ψ̅⁽²⁾(x,y) defines the second binary image of a letter, digit or symbol, and the period T_{ϕ} of the Fresnel lens and the periods T_{ψ}⁽¹⁾ and Tψ⁽²⁾ do not coincide but differ by no more than 5%. In each elementary subarea Qij there are areas with the phase function Φ(x,y), equal to a constant, which are partially or fully filled with diffraction gratings of various orientations with periods of 0.35-1.0 µm. When the micro-optical system is illuminated by a point light source, at diffraction angles smaller than 60° the observer sees on the entire area Q of the optical element two images defined by functions ψ⁽¹⁾(x,y) and ψ⁽²⁾(x,y); the kinematic effect consists in the motion of image fragments when the optical element is tilted, and when the diffraction angles exceed 60° the observer sees another colored image on the entire area of the micro-optical element.

3. The micro-optical system for visual imaging according to claim 2 of the invention distinguished in that the parameters Δ_{T}⁽¹⁾= T_{ψ}⁽¹⁾- T_{ϕ} and Δ_{T}⁽²⁾= T_{ψ}⁽²⁾- T_{ϕ} differ in sign, and when the micro-optical system is illuminated by a point light source at diffraction angles smaller than 60° the observer sees two images on the entire area Q of the optical element, The kinematic effect consists in the motion of image fragments generated by functions ψ⁽¹⁾(x,y) and ψ⁽²⁾(x,y) towards each when the optical element is tilted.

4. Micro-optical system for the formation of visual images in the form of a flat single-layer reflective diffractive optical phase element that forms the image of letters, digits, or symbols with kinematic effects of motion, distinguished in that the area Q of the optical element, which has the form of the rectangle |x| ≤ Lₓ/2 |y| ≤ L_{y}/2, is subdivided with the period T_{ϕ} into elementary areas Qij with the sizes no greater than 250 µm and centered at the points (xi,yj), i = 1 ... N, j = 1 ... M. Each elementary area Qij is subdivided into two rectangular subareas Q⁽¹⁾ᵢⱼ for y> yj and Q⁽²⁾ᵢⱼ for y< yⱼ. In each area Qij the microrelief of the flat optical element with the phase function Φ(x,y) is computed; the phase function at point (x,y) of each elementary area Qij is computed by the formula Φ(x,y) = ϕᵢⱼ(x,y) · ψ⁽¹⁾(x,y) for points of area Q⁽¹⁾ᵢⱼ, and by the formula Φ(x,y) = ϕᵢⱼ(x,y) · ψ̅⁽²⁾(x,y) for points of area Q⁽²⁾ᵢⱼ, i = 1 ... N, j = 1 ... M, where ϕᵢⱼ(x,y) is the phase function of the axial Fresnel lens centered at the point (xi,yj) and computed by the formula ϕᵢⱼ(x,y) = C [(x-xᵢ)²+(y-yⱼ)²], where C is a given parameter, and the functions ψ⁽¹⁾(x,y) and ψ⁽²⁾(x,y) are periodic extensions with period T_{ψ} of the functions ψ̅⁽¹⁾(x,y) and ψ̅⁽²⁾(x,y), the function ψ̅⁽¹⁾(x,y) defines the first binary representation of a letter, digit, or symbol in the areas Q⁽¹⁾ᵢⱼ, the function ψ̅⁽²⁾(x,y) defines the second binary image of the letter, digit or symbol in the areas Q⁽²⁾ᵢⱼ, and the period T_{ϕ} of the Fresnel lens does not coincide with the period T_{ψ}, but differs from it by no more than 5%. In each elementary area Qij subareas are distinguished where the phase function Φ(x,y) is a constant, which are partly or entirely filled with the diffraction gratings of various orientations with the periods 0.35-1.0 µm. When the micro-optical system is illuminated by a point light source the observer sees on the entire area Q of the optical element at the diffraction angles ranging from 0° to +30° the image defined by the function ψ⁽¹⁾(x,y), while at diffraction angles ranging from from 0° to -30° the observer sees another image defined by the function ψ⁽²⁾(x,y), and the kinematic effect consists both in the alternation of two images and in the motion of image fragments when the optical element is tilted, and when the diffraction angles exceed 60° the observer sees another colored image on the entire surface of the micro-optical element.

5. A micro-optical system for the formation of visual images in the form of a flat single-layer reflective diffractive optical phase element, forming the image of letters, digits, or symbols with kinematic effects of motion, distinguished in that the area Q of the optical element, which has the form of the rectangle |x| ≤ Lₓ/2 |y| ≤ L_{y}/2, is subdivided with the period T_{ϕ} into elementary areas Qij centered at the points (xi,yj), i = 1 ... N, j = 1 ... M, and, each elementary area Qij contains area Q̃ᵢⱼ with the size no greater than 250 µm centered at the point (x'i,y'j); in each area Qij the microrelief of the flat optical element with the phase function Φ(x,y) is computed, which is equal to zero at any point (x,y) not belonging to Q̃ᵢⱼ, whereas at each point (x,y) of the elementary area Qij belonging to Q̃ᵢⱼ the phase function Φ(x,y) is computed by the formula Φ(x,y) = ϕᵢⱼ(x,y) · ψ(x+Δₓ,y+Δ_{y}), i = 1 ... N, j = 1 ... M, _{Γe} ϕᵢⱼ(x,y) = C [(x-x'ᵢ)²+(y-y'ⱼ)²], where C is a given parameter, and the function ψ(x,y) is the periodic extension with period T_{ψ} of the function ψ̅(x,y) that defines the binary representation of a letter, digit, or symbol. The parameters Δx and Δy are computed by the formulas Δₓ= (T_{ψ}/ T_{ϕ}) · (xᵢ-x'ᵢ), Δ_{y}= (T_{ψ}/ T_{ϕ}) · (yⱼ-y'ⱼ), and the period T_{ϕ} and the period T_{ψ} do not coincide but differ by no more than 5%. In each elementary area Qij subareas are distinguished where the phase function Φ(x,y) is constant and which are filled partially or entirely with diffraction gratings of various orientations with periods ranging from 0.35 to 1.0 µm. Thus when the micro-optical system is illuminated by a point light source the observer sees at diffraction angles smaller than 60° on the entire area Q of the optical element an image consisting of light letters on dark background, the kinematic effect consists in the motion of letters when the optical element tilted, whereas at diffraction angles greater 60° the observer sees another colored image on the entire surface of the micro-optical element.
